# EUROPEAN PATENT SPECIFICATION

(11) **EP 4 469 360 B1**
(45) Date of publication and mention of the grant of the patent: **21.05.2025**
(21) Application number: 22844213.3
(22) Date of filing: 27.12.2022
(51) Int. Cl.: B65D 1/02, B29B 17/00

(54) **FLEXIBLE MATERIAL BOTTLE WITH A FOLDABLE PART AND FASTENING ELEMENT**
FLEXIBLE MATERIALFLASCHE MIT FALTBAREM TEIL UND BEFESTIGUNGSELEMENT
BOUTEILLE EN MATÉRIAU SOUPLE À PARTIE PLIABLE ET ÉLÉMENT DE FIXATION

(30) Priority: 08.04.2022 LV 220027
(43) Date of publication of application: 04.12.2024
(73) Proprietor: Paupers, Andrejs, Riga 1014 (LV)
(72) Inventor: Paupers, Andrejs, Riga 1014 (LV)
(74) Representative: Bardehle Pagenberg S.L.
(86) International application number: PCT/EP2022/087896
(87) International publication number: WO 2023/193946

(56) References cited:
- WO-A1-2016/034750
- WO-A1-2018/015819
- DE-U1- 202016 004 298
- JP-A- H10 264 933

## Description

The invention relates to a bottle comprising a flexible main part (3), an opening part (2) and a strap (4a) or a pocket (4b).

### Background of the art

Different types of bottles are available on the market: disposable plastic bottles that are discarded or recycled after use, or reusable plastic bottles that can be refilled with the desired liquid after use.

Disposable bottles made of a flexible plastic material that can be folded down after use to reduce their size are known (B. Giacomo., Container with composite structure, EP 0 525 908 B1), such bottles generally have thin and flexible walls which are obtained by blowing plastic.

A collapsible, roll-up bottle with a fastening element is also known (B. Giacomo., Foldable bottle with fastening element, EP 0 599 421 B1), wherein the bottle is made of a blown plastic material. In this solution, the connecting element consists of a groove or at least one protrusion formed in the wall part between the opening part of the bottle and the sidewalls of the bottle, where the fastening element either enters the segment groove or is against at least one protrusion.

Also, a collapsible reusable plastic bottle is known (J.Swarts, R. Smiedt., Collapsible travel bottle, WO 2020/148739 A3) in which the middle part of the bottle is designed so that its upper part with the opening part of the bottle and the middle part can be fully enveloped within the lower part.

As well there is known a bottle, where the opening part of which is arranged and fixed at an angle of 45 degrees to the liquid holding part of the bottle, such a solution is intended for more convenient emptying of the content of the bottle.

The main disadvantage of reusable plastic bottles is that they have to be carried with the user after use of the liquid, which is inconvenient so consumers are more likely to choose disposable bottles that can be discarded after use. Thus, the object of the invention is a bottle which, when emptied, easily assumes the new shape of the empty container, thus taking up less space than when filled, and, when filled, occupies a rectangular shape that is convenient to carry, for example, in a pocket. This bottle solution is suitable for both disposable and reusable bottles.

Document WO 2018/015819 A1 discloses a method of securing a compacted mass of a bottle to a neck of the bottle using a fastening belt. Document WO 2016/034750 A1 discloses a device comprising a strap provided with adhesive material configured to be wound around a compressed package to maintain the package in a compressed shape.

Document DE 20 2016 004 298 U1 discloses a wrap attached to the bottom of a bottle which, after the bottle is compressed, can be attached to the neck of the bottle for maintaining the bottle compressed and folded into two equal parts. Document JP H10 264933 A discloses an elastically deformable container comprising an elastic ring in a bottom wall of the container which can be fitted to a cap located at the upper end of the bottle.

### The object of the invention

The present invention is defined in the appended claims. The invention is illustrated by the following drawings
FIG. 1.1. preview of the bottle
FIG. 2.1. front view of the bottle with the folded part of the bottle opening secured behind the strap
FIG.2.2. front view of the bottle with the folded part of the bottle opening, hidden in the embedded pocket
FIG 3.1. side view of the bottle with the folded part of the bottle opening secured behind the strap
FIG.3.2. side view of the bottle with the folded part of the bottle opening hidden in the embedded pocket

The drawings are illustrative and are not intended to limit the invention in any way.

The main part (3) of the soft, flexible bottle comprises an inner part (5) for receiving liquids. The main part of the bottle (3) consists of a flexible and water-resistant material - silicone rubber or any other flexible material, with the values of the modulus of elasticity from 5 KPa to 3 GPa. The rigid or medium-hard part of the bottle opening part (2) and the closure part (1) consists of inelastic, water-resistant material, such as plastic, with a Rockwell R hardness of at least 50R or more.

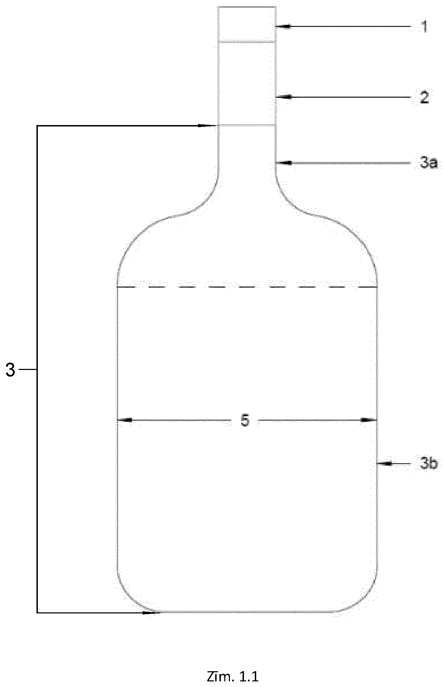

In the bottle preview of FIG. 1.1., the bottle is visible in the open layout. The bottle is divided into several parts: the closure part (1), the opening part (2), and the main part (3). The main part of the bottle (3) is divided into subparts: upper part (3a) and lower part (3b). The upper part (3a) is the bending part of the bottle. The lower part (3b) is the liquid-holding part of the bottle.

The opening part (2) is connected to the inner part (5) of the bottle of the flexible main part (3) and is intended for receiving or discharging a liquid. The closure part (1) is located above the opening part (2), it is intended for receiving liquid or restricting receiving and discharging the liquid. The closure (1) and the opening (2) parts may be made of any rigid or medium-hard material, the thickness of both parts must be at least 0,3 mm or more and the hardness parameter on the Rockwell R scale must be at least 50R or more. The main part (3), is made of silicone or any other flexible material, intended for both food liquids and any other liquids, including technical liquids. The material forming the main part (3) must be at least 0,3 mm thick or thicker.

Depending on the specifics of the liquids and the volume of the bottle, the percentages of the lengths of the main part (3), subparts (3a) and (3b) of the total length of the bottle can be varied in different sizes. These values and their proportions may be applied from at least 1 to 99 and upwards, where one percent of the total length is the upper part (3a) and 99 percent of the total length of the bottle is the lower part (3b).

The experimentally optimal percentage distribution ranges from 25 percent to 75 percent and up to 30 percent to 70 percent, with the first number referring to the upper part (3a) and the second number referring to the lower part (3b). The optimal location of the embedded strap (4a) and the embedded pocket (4b) is determined vertically and longitudinally in the main part (3).

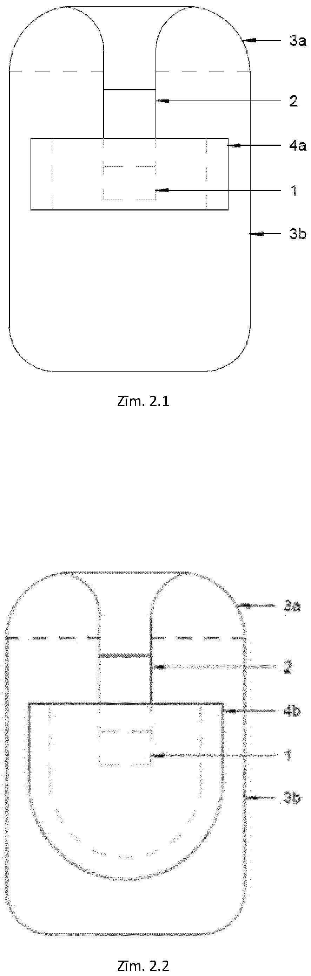

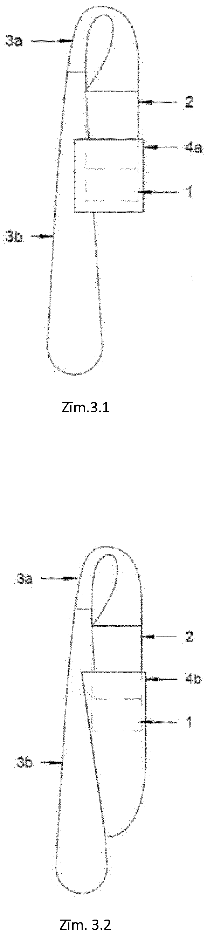

In FIG. 2.1. and FIG. 2.2., the bottle is shown in a folded layout. In FIG. 2.1., an embedded strap (4a) is shown behind which the closing part (1) with the opening part (2) is folded and secured. In FIG. 2.2., an embedded pocket (4b) is shown behind which the closing part (1) with the opening part (2) is folded and secured. The strap (4a) or the pocket (4b) embedded in the bottle is arranged longitudinally in the main part (3) and is centered both vertically and longitudinally. The strap (4a) or the pocket (4b) can be made of different elastic materials. The strap (4a) or the pocket (4b) can also be located anywhere in the main part of the bottle (3). The material of the strap (4a) or the pocket (4b) must be at least 0,3 mm or thicker. The embedded strap (4a) or the embedded pocket (4b) can be attached to the main part of the bottle (3) by glue, fusing, or pinning. In the side view of the bottle of FIG. 3.1. and FIG. 3.2., the thinner part of the upper part (3a) must be at least 5 mm thick or thicker, while the thicker edge of the lower part of the bottle (3b) must be at least 8 mm thick or thicker. The proportion of these parameters can be changed from a ratio of 1 to 1 and their infinite increase. The optimal ratio is 1 to 2.5, where the thinnest part of the upper part (3a) is 10 mm thick and the thickest edge of the lower part of the bottle (3b) is 25 mm thick.

The side view of the bottle of FIG 3.1. shows a bottle-bending solution in which the bottle closure part (1) together with the opening part (2) can be bent in a vertical plane from at least 140 to 190 degrees with respect to the lower part (3b) of the bottle. Both parts, i.e. the closure part (1) together with the opening part (2), are folded and hooked behind a special strap (4a) embedded in the bottle, or, in FIG. 3.2., behind the pocket (4b) embedded in the bottle. This solution allows for optimizing the shape and capacity of the bottle.

The folding solution of the bottle allows for a spatial saving of at least 15 %, which in turn means that when transporting the filled bottles, they occupy 15 % less space in comparison with the bottles whose closure un opening parts cannot be bent.

Such solution provides at least 100 to 1000 folding cycles without any mechanical damage or deformation.

Such a bottle can be used both repeatedly and once, depending on the specifics of the liquid to be filled. The bottle may be reusable or disposable. The bottle is suitable for food liquids or technical liquids.

In FIG. 3.1. and FIG. 3.2., the thinner place of the experimentally defined upper part (3a) is 10 mm thick, while the thickest edge of the lower part of the bottle (3b) is 25 mm thick.

## Claims

1. A bottle comprising:
- a flexible main part (3) with an inner part (5) for receiving a liquid therein, wherein the main part (3) includes an upper part (3a) and a lower part (3b);
- an opening part (2) located in the upper part (3a) of the main part (3), which is intended for receiving of the liquid in the inner part (5) of the main part (3) and for discharging the liquid from the inner part (5) of the main part (3);
- a closure part (1) above the opening part (2) to restrict the receiving and discharging of the liquid;
**characterized in that** a strap (4a) is embedded in the main part (3) such that the upper part (3a), along with the opening part (2) and the closure part (1), can be bent and secured behind the strap (4a); or
a pocket (4b) is embedded in the main part (3) such that the upper part (3a), along with the opening part (2) and the closure part (1), can be bent and hidden in the pocket (4b).

2. The bottle according to claim 1, where the strap (4a) or pocket (4b) is glued or fused or pinned in the main part of the bottle (3).

3. The bottle according to claims 1 and 2, wherein the strap (4a) or pocket (4b) has a thickness of at least 0.3 mm or more.

4. The bottle according to any one of the preceding claims, wherein the strap (4a) or the pocket (4b) is located anywhere in the main part (3) of the bottle.

5. The bottle according to claim 1, where the upper part (3a) is at least 5 mm thick or thicker, while the lower part (3b) is at least 8 mm or thicker.

6. The bottle according to claim 1, where the closure part (1) and the opening part (2) is folded at least 140 to 190 degrees relative to the lower part of the bottle (3b).

7. The bottle according to claim 1, wherein the thickness of the material forming the main part (3) is at least 0.3 mm or thicker.

8. The bottle according to any one of claims 1 to 7, wherein the bottle is reusable.

9. The bottle according to any of the claims 1 to 7, wherein the bottle is disposable.

10. The bottle according to any one of claims 1 to 9 suitable for food liquids.

11. The bottle according to any one of claims 1 to 9 suitable for technical liquids.

## Patentansprüche

1. Eine Flasche, bestehend aus:
- einen flexiblen Hauptteil (3) mit einem Innenteil (5) zur Aufnahme einer Flüssigkeit, wobei der Hauptteil (3) einen oberen Teil (3a) und einen unteren Teil (3b) aufweist;
- ein Öffnungsteil (2), das sich im oberen Teil (3a) des Hauptteils (3) befindet und zur Aufnahme der Flüssigkeit im Innenteil (5) des Hauptteils (3) und zum Ablassen der Flüssigkeit aus dem Innenteil (5) des Hauptteils (3) bestimmt ist
- ein Verschlussteil (1) oberhalb des Öffnungsteils (2), um die Aufnahme und Abgabe der Flüssigkeit zu begrenzen;
**dadurch gekennzeichnet, dass** ein Riemen (4a) in den Hauptteil (3) eingebettet ist, so dass der obere Teil (3a) zusammen mit dem Öffnungsteil (2) und dem Verschlussteil (1) gebogen und hinter dem Riemen (4a) befestigt werden kann; oder
eine Tasche (4b) in den Hauptteil (3) eingebettet ist, so dass der obere Teil (3a) zusammen mit dem Öffnungsteil (2) und dem Verschlussteil (1) gebogen und in der Tasche (4b) versteckt werden kann.

2. Flasche nach Anspruch 1, wobei der Riemen (4a) oder die Tasche (4b) in den Hauptteil der Flasche (3) eingeklebt oder eingeschmolzen oder eingesteckt ist.

3. Flasche nach einem der Ansprüche 1 und 2, wobei der Riemen (4a) oder die Tasche (4b) eine Dicke von mindestens 0,3 mm oder mehr aufweist.

4. Flasche nach einem der vorhergehenden Ansprüche, wobei sich der Riemen (4a) oder die Tasche (4b) an einer beliebigen Stelle im Hauptteil (3) der Flasche befindet.

5. Flasche nach Anspruch 1, wobei der obere Teil (3a) mindestens 5 mm dick oder dicker ist, während der untere Teil (3b) mindestens 8 mm oder dicker ist.

6. Flasche nach Anspruch 1, wobei der Verschlussteil (1) und der Öffnungsteil (2) um mindestens 140 bis 190 Grad in Bezug auf den unteren Teil der Flasche (3b) gefaltet sind.

7. Flasche nach Anspruch 1, wobei die Dicke des Materials, aus dem der Hauptteil (3) besteht, mindestens 0,3 mm oder dicker ist.

8. Flasche nach einem der Ansprüche 1 bis 7, wobei die Flasche wiederverwendbar ist.

9. Flasche nach einem der Ansprüche 1 bis 7, wobei es sich um eine Einwegflasche handelt.

10. Flasche nach einem der Ansprüche 1 bis 9 geeignet für Lebensmittelflüssigkeiten.

11. Flasche nach einem der Ansprüche 1 bis 9 geeignet für technische Flüssigkeiten.

## Revendications

1. Une bouteille comprenant
- une partie principale flexible (3) avec une partie intérieure (5) pour recevoir un liquide, dans laquelle la partie principale (3) comprend une partie supérieure (3a) et une partie inférieure (3b) ;
- une partie d'ouverture (2) situé dans la partie supérieure (3a) de la partie principale (3), destiné à recevoir le liquide dans la partie intérieure (5) de la partie principale (3) et à évacuer le liquide de la partie intérieure (5) de la partie principale (3) ;
- une partie de fermeture (1) au-dessus de la partie d'ouverture (2) pour limiter la réception et l'évacuation du liquide ;
**caractérisée en ce qu'**une sangle (4a) est intégrée dans la partie principale (3) de sorte que la partie supérieure (3a), ainsi que la partie d'ouverture (2) et la partie de fermeture (1), peuvent être pliées et fixées derrière la sangle (4a) ; ou
une poche (4b) est encastrée dans la partie principale (3) de sorte que la partie supérieure (3a), ainsi que la partie d'ouverture (2) et la partie de fermeture (1), peuvent être pliées et cachées dans la poche (4b).

2. La bouteille selon la revendication 1, dans laquelle la sangle (4a) ou la poche (4b) est collée, fusionnée ou épinglée dans la partie principale de la bouteille (3).

3. La bouteille selon les revendications 1 et 2, dans laquelle la sangle (4a) ou la poche (4b) a une épaisseur d'au moins 0,3 mm ou plus.

4. La bouteille selon l'une des revendications précédentes, dans laquelle la sangle (4a) ou la poche (4b) est située n'importe où dans la partie principale (3) de la bouteille.

5. La bouteille selon la revendication 1, dans laquelle la partie supérieure (3a) a une épaisseur d'au moins 5 mm ou plus, tandis que la partie inférieure (3b) a une épaisseur d'au moins 8 mm ou plus.

6. La bouteille selon la revendication 1, dans laquelle la partie de fermeture (1) et la partie d'ouverture (2) sont pliées d'au moins 140 à 190 degrés par rapport à la partie inférieure de la bouteille (3b).

7. La bouteille selon la revendication 1, dans laquelle l'épaisseur du matériau formant la partie principale (3) est d'au moins 0,3 mm ou plus.

8. La bouteille selon l'une des revendications 1 à 7, dans laquelle la bouteille est réutilisable.

9. La bouteille selon l'une des revendications 1 à 7, dans laquelle la bouteille est jetable.

10. La bouteille selon l'une des revendications 1 à 9 adaptée pour les liquides alimentaires.

11. La bouteille selon l'une des revendications 1 à 9 adaptée pour les liquides techniques.
